# EUROPÄISCHE PATENTSCHRIFT

(11) **EP 3 385 590 B1**
(45) Veröffentlichungstag und Bekanntmachung des Hinweises auf die Patenterteilung: **24.07.2019**
(21) Anmeldenummer: 17165005.4
(22) Anmeldetag: 05.04.2017
(51) Int. Cl.: F16L 11/24, F16L 11/11

(54) **WICKELSCHLAUCH**
STRIP WOUND HOSE
GAINE FLEXIBLE

(43) Veröffentlichungstag der Anmeldung: 10.10.2018
(73) Patentinhaber: APD Schlauchtechnik GmbH, 41751 Viersen (DE)
(72) Erfinder: Skowronek, Roland, 47906 Kempen (DE); Huppertz, Ralf, 41366 Schwalmtal (DE)
(74) Vertreter: Rohmann, Michael

(56) Entgegenhaltungen:
- WO-A1-2015/037448
- DE-A1-102015 114 117
- DE-U1- 29 602 061

## Beschreibung

Die Erfindung betrifft einen Wickelschlauch mit zumindest einem zu einem Schlauchkörper wendelförmig gewickelten Materialstreifen, insbesondere mit zumindest einem zu dem Schlauchkörper wendelförmig gewickelten Kunststoffstreifen und mit zumindest zwei mit dem Schlauchkörper verbundenen Verstärkungswendeln.

Wickelschläuche der vorstehend beschriebenen Art sind aus der Praxis in unterschiedlichen Ausführungsformen bekannt. Man ist bestrebt diese Wickelschläuche ausreichend flexibel auszugestalten. Andererseits sollen die Wickelschläuche gegenüber mechanischen Einwirkungen, insbesondere auch von außen, ausreichend resistent ausgebildet sein. Wesentlich ist fernerhin, dass die Wickelschläuche gegenüber unterschiedlichen Innendrücken genügend widerstandsfähig sind. Die Wickelschläuche sollen in der Regel hoch vakuumbelastbar sein und häufig auch zusätzlich gegenüber hohen Innendrücken ausreichend resistent sein. Bei den aus der Praxis bzw. aus dem Stand der Technik bekannten Wickelschläuchen lassen sich normalerweise nicht alle diese Eigenschaften in Kombination realisieren. Bestrebungen die Wickelschläuche sehr flexibel auszugestalten führen häufig dazu, dass die resultierenden Wickelschläuche gegenüber mechanischen Einwirkungen und/oder gegenüber unterschiedlichen Innendrücken nicht genügend widerstandsfähig sind. Andererseits führt eine sehr widerstandsfähige Ausgestaltung der Wickelschläuche oftmals zu einer unbefriedigenden Flexibilität. Insoweit besteht Verbesserungsbedarf.

Aus DE 10 2015 114 117 A1 ist ein Wickelschlauch mit zu einem Schlauchkörper wendelförmig gewickelten Materialstreifen bekannt, wobei Verstärkungswendeln mit dem Schlauchkörper verbunden sind. Eine Verstärkungswendel ist bezüglich ihres Umfanges vollständig in den Schlauchkörper eingebettet. Es ist eine zweite Verstärkungswendel an der Außenoberfläche des Schlauchkörpers angeordnet, die über weniger als 50 % ihres Umfanges in den Schlauchkörper eingebettet ist. Die Widerstandsfähigkeit dieses Wickelschlauches gegenüber mechanischen Einwirkungen lässt zu wünschen übrig.

Weiterhin ist aus DE 296 02 061 U1 ein Wickelschlauch bekannt, bei dem ebenfalls Materialstreifen zu dem Schlauchkörper wendelförmig gewickelt sind und bei dem eine mit dem Schlauchkörper verbundene Verstärkungswendel vorgesehen ist, die bezüglich ihres Umfanges vollständig in den Schlauchkörper eingebettet ist. Weiterhin ist ein wendelförmig gewickelter elektrischer Leiter vorgesehen, der an der Außenoberfläche des Schlauchkörpers angeordnet ist und der bezüglich seines Umfanges nur teilweise in den Schlauchkörper eingebettet ist bzw. über weniger als 50 % seines Umfanges in den Schlauchkörper eingebettet ist. Auch bei diesem Wickelschlauch lassen die mechanischen Eigenschaften zu wünschen übrig.

Schließlich ist aus WO 2015/037448 A1 ebenfalls ein Wickelschlauch bekannt, der einen zu einem Schlauchkörper wendelförmig gewickelten Materialstreifen sowie zwei mit dem Schlauchkörper verbundene Verstärkungswendeln aufweist. Eine erste Verstärkungswendel ist bezüglich ihres Umfanges vollständig in den Schlauchkörper eingebettet und eine zweite Verstärkungswendel ist lediglich teilweise bezüglich ihres Umfanges in den Schlauchkörper eingebettet. Dieser Schlauchkörper lässt sowohl im Hinblick auf seine mechanische Widerstandsfähigkeit als auch im Hinblick auf seine Flexibilität zu wünschen übrig.

Daher liegt der Erfindung das technische Problem zugrunde, einen Wickelschlauch der eingangs genannten Art anzugeben, der einerseits sehr flexibel ausgebildet ist und andererseits ausreichend resistent gegenüber äußeren mechanischen Einwirkungen sowie auch gegenüber unterschiedlichen Innendrücken ist. Der Wickelschlauch soll vor allem auch eine hohe Vakuumbelastbarkeit aufweisen.

Zur Lösung dieses technischen Problems lehrt die Erfindung einen Wickelschlauch mit zumindest einem zu einem Schlauchkörper wendelförmig gewickelten Materialstreifen, insbesondere mit zumindest einem zu einem Schlauchkörper wendelförmig gewickelten Kunststoffstreifen und mit zumindest zwei - vorzugsweise zwei - mit dem Schlauchkörper verbundenen Verstärkungswendeln,
wobei zumindest eine erste Verstärkungswendel - vorzugsweise eine erste Verstärkungswendel - bezüglich ihres Umfanges vollständig in den Schlauchkörper bzw. in das Material - insbesondere in den Kunststoff - des Schlauchkörpers eingebettet ist,
wobei zumindest eine zweite Verstärkungswendel - insbesondere eine zweite Verstärkungswendel - an der Außenoberfläche des Schlauchkörpers angeordnet ist, wobei diese zweite Verstärkungswendel bezüglich ihres Umfanges lediglich teilweise in den Schlauchkörper eingebettet ist und wobei die zweite Verstärkungswendel über weniger als 50 %, vorzugsweise über weniger als 48 % und bevorzugt über weniger als 45 % ihres Umfanges in den Schlauchkörper eingebettet ist
und wobei die radiale Dicke D₁ der ersten Verstärkungswendel mehr als dreimal so groß ist wie die radiale Dicke d₁ des Schlauchkörpers schlauchinnenseitig unterhalb der ersten Verstärkungswendel und mindestens zweimal so groß ist wie die radiale Dicke d2 des Schlauchkörpers schlauchaußenseitig oberhalb der ersten Verstärkungswendel.

Empfohlenermaßen ist die zweite Verstärkungswendel über weniger als 43 %, insbesondere über weniger als 40 %, vorzugsweise über weniger als 38 % und bevorzugt über weniger als 35 % ihres Umfanges in den Schlauchkörper eingebettet. Der Begriff Umfang bezieht sich hier und nachfolgend insbesondere auf den Querschnitt einer bzw. der Verstärkungswendel. Der prozentual angegebene Teil des Umfangs meint also den prozentualen Teil des Umfangs des Querschnittes der Verstärkungswendel. Es liegt im Rahmen der Erfindung, dass sich die erfindungsgemäße lediglich teilweise Einbettung der zweiten Verstärkungswendel in den Schlauchkörper über zumindest 85 %, vorzugsweise über zumindest 90 % und bevorzugt über zumindest 95 % der Länge der zweiten Verstärkungswendel erstreckt. Empfohlenermaßen erstreckt sich die erfindungsgemäße lediglich teilweise Einbettung der zweiten Verstärkungswendel in den Schlauchkörper über die gesamte Länge bzw. im Wesentlichen über die gesamte Länge der zweiten Verstärkungswendel. Es liegt weiterhin im Rahmen der Erfindung, dass die zweite Verstärkungswendel einen runden, insbesondere einen kreisrunden bzw. im Wesentlichen kreisrunden Querschnitt aufweist. Zweckmäßigerweise hat auch die erste Verstärkungswendel einen runden, insbesondere einen kreisrunden bzw. einen im Wesentlichen kreisrunden Querschnitt.

Eine besonders empfohlene Ausführungsform des erfindungsgemäßen Wickelschlauches ist dadurch gekennzeichnet, dass der zum Wickelschlauch gewickelte Materialstreifen als Kunststoffstreifen aus thermoplastischem Kunststoff ausgebildet ist. Vorzugsweise überlappen sich in dem Wickelschlauch benachbarte Kunststoffstreifenabschnitte eines bzw. des wendelförmig gewickelten Kunststoffstreifens mit ihren Längskantenabschnitten. Zweckmäßigerweise sind die benachbarten Kunststoffstreifenabschnitte über ihre sich überlappenden Längskantenabschnitte im Überlappungsbereich miteinander verschweißt. Empfohlenermaßen ist diese Verschweißung der überlappenden Längskantenabschnitte im Überlappungsbereich zusatz-klebstoff-frei und/oder zusatz-schweißwerkstoff-frei ausgebildet. Das bedeutet, dass gemäß bevorzugter Ausführungsform kein zusätzlicher Klebstoff und/oder kein zusätzlicher Schweißwerkstoff für die gegenseitige Fixierung der Kunststoffstreifenabschnitte bzw. ihrer Längskantenabschnitte erforderlich ist. Vielmehr erfolgt zweckmäßigerweise die Verschweißung bzw. stoffschlüssige Verbindung der Längskantenabschnitte im Zuge des Wickelvorgangs mittels des weichen bzw. schmelzflüssigen thermoplastischen Kunststoffes der Kunststoffstreifenabschnitte bzw. Längskantenabschnitte.

Eine empfohlene Ausführungsform der Erfindung zeichnet sich dadurch aus, dass die zweite lediglich teilweise in den Schlauchkörper eingebettete Verstärkungswendel bzw. deren Verstärkungswendelabschnitte - in der Draufsicht auf den Wickelschlauch - über den Überlappungsbereichen überlappender Längskantenabschnitte des Kunststoffstreifens angeordnet ist/sind. Vorzugsweise sind bezüglich eines Längsschnittes durch den Wickelschlauch zumindest 70 %, bevorzugt zumindest 80 % und sehr bevorzugt zumindest 90 % der Querschnittsfläche der zweiten Verstärkungswendel über bzw. mittelbar über den Überlappungsbereich zweier Längskantenabschnitte des Kunststoffstreifens angeordnet. Gemäß bevorzugter Ausführungsform der Erfindung grenzt die zweite Verstärkungswendel bzw. grenzen die Verstärkungswendelabschnitte der zweiten Verstärkungswendel an das äußere Ende der Überlappungsnaht bzw. Schweißnaht des Überlappungsbereiches zweiter Längskantenabschnitte des Kunststoffstreifens an. Mit anderen Worten endet die Überlappungsnaht bzw. die Schweißnaht dieses Überlappungsbereiches an der zweiten Verstärkungswendel bzw. jeweils an den Verstärkungswendelabschnitten der zweiten Verstärkungswendel. Eine empfohlene Ausführungsform der Erfindung ist dadurch gekennzeichnet, dass die Überlappungsnaht bzw. die Schweißnaht zwischen benachbarten Längskantenabschnitten des Kunststoffstreifens und/oder eine gedachte Verlängerung dieser Überlappungsnaht bzw. Schweißnaht eine Tangente bezüglich des runden bzw. vorzugsweise kreisrunden Querschnittes der zweiten Verstärkungswendel bildet.

Eine bewährte Ausführungsform des erfindungsgemäßen Wickelschlauches ist dadurch gekennzeichnet, dass die Außenoberfläche der Schlauchwandung des Wickelschlauches bzw. die Außenoberfläche der überlappenden Kunststoffstreifenabschnitte in Längsrichtung des Wickelschlauches Wellentäler und Wellenberge bildet, wobei die Wellentäler und Wellenberge vorzugsweise über den gesamten Umfang des Wickelschlauches umlaufen. Eine sehr empfohlene Variante dieser Ausführungsform zeichnet sich dadurch aus, dass die zweite Verstärkungswendel in den Wellentälern der Außenoberfläche der Schlauchwandung angeordnet bzw. eingebettet ist.

Es liegt im Rahmen der Erfindung, dass die erste Verstärkungswendel in den Kunststoffstreifen - insbesondere in den Kunststoffstreifen aus thermoplastischem Kunststoff - des Wickelschlauches vollständig eingebettet ist. Weiterhin liegt es im Rahmen der Erfindung, dass die erste Verstärkungswendel parallel bzw. im Wesentlichen parallel zu dem Kunststoffstreifen bzw. parallel/im Wesentlichen parallel zur Wickelrichtung des Kunststoffstreifens verläuft. Bei der vorstehend beschriebenen bevorzugten Ausführungsform mit Wellentälern und Wellenbergen an der Außenoberfläche der Wickelschlauchwandung ist die erste Verstärkungswendel bzw. sind die Verstärkungswendelabschnitte der ersten Verstärkungswendel zweckmäßigerweise im Bereich der Wellenberge bzw. unterhalb der Wellenberge in den Schlauchkörper bzw. in den Kunststoffstreifen des Wickelschlauches eingebettet.

Vorzugsweise besteht die erste Verstärkungswendel aus Kunststoff bzw. im Wesentlichen aus Kunststoff. Es empfiehlt sich dabei, dass der Kunststoff der ersten Verstärkungswendel eine größere Härte, bevorzugt eine wesentlich größere Härte aufweist als der Kunststoff des Kunststoffstreifens, in den die erste Verstärkungswendel vollständig eingebettet ist. Gemäß einer Ausführungsvariante besteht die erste Verstärkungswendel aus PVC bzw. aus Hart-PVC.

Nach einer Ausführungsform der Erfindung ist die radiale Dicke d₁ des Schlauchkörpermaterials schlauchinnenseitig unterhalb der ersten Verstärkungswendel geringer als die radiale Dicke d₂ des Schlauchkörpermaterials schlauchaußenseitig oberhalb der ersten Verstärkungswendel. Bei dieser Ausführungsform ist zweckmäßigerweise die Dicke d₁ geringer als 50 % der Dicke d₂, vorzugsweise geringer als 40 % der Dicke d₂. - Gemäß einer anderen Ausführungsform der Erfindung kann die radiale Dicke d₁ aber auch gleich bzw. im Wesentlichen gleich der radialen Dicke d₂ sein. Eine weitere Ausführungsform ist dadurch gekennzeichnet, dass die radiale Dicke d₁ des Schlauchkörpermaterials schlauchinnenseitig unterhalb der ersten Verstärkungswendel größer ist als die radiale Dicke d₂ des Schlauchkörpermaterials schlauchaußenseitig oberhalb der ersten Verstärkungswendel.

Eine empfohlene Ausführungsform der Erfindung ist dadurch gekennzeichnet, dass die radiale Dicke D₁ der ersten Verstärkungswendel größer ist als die radiale Dicke d₁ des Schlauchkörpermaterials schlauchinnenseitig unterhalb der ersten Verstärkungswendel und vorzugsweise auch größer ist als die radiale Dicke d₂ des Schlauchkörpermaterials schlauchaußenseitig oberhalb der ersten Verstärkungswendel. Bei vorzugsweise kreisrundem Querschnitt der ersten Verstärkungswendel entspricht die radiale Dicke D₁ dem Durchmesser der ersten Verstärkungswendel. Erfindungsgemäß ist die radiale Dicke D₁ der ersten Verstärkungswendel mehr als dreimal so groß und insbesondere mehr als viermal so groß wie die radiale Dicke d₁ des Schlauchkörpermaterials schlauchinnenseitig unterhalb der ersten Verstärkungswendel. Erfindungsgemäß ist weiterhin die radiale Dicke D₁ der ersten Verstärkungswendel mehr als zweimal so groß und bevorzugt mehr als dreimal so groß wie die radiale Dicke d₂ des Schlauchkörpermaterials schlauchaußenseitig oberhalb der ersten Verstärkungswendel.

Es liegt im Rahmen der Erfindung, dass die zweite Verstärkungswendel formschlüssig und bevorzugt zusatz-klebstoff-frei und/oder zusatz-schweißstoff-frei an der Außenoberfläche des Schlauchkörpers teilweise in den Schlauchkörper eingebettet ist. Somit wird vorzugweise kein zusätzlicher Klebstoff und/oder kein zusätzlicher Schweißwerkstoff zum Fixieren der zweiten Verstärkungswendel an der Außenoberfläche des Schlauchkörpers verwendet. Zweckmäßigerweise wird die zweite Verstärkungswendel im Zuge des Wickelvorgangs des erfindungsgemäßen Wickelschlauches in den weichen bzw. schmelzflüssigen Kunststoff des Kunststoffstreifens eingebettet bzw. teilweise eingebettet und auf diese Weise formschlüssig an der Außenoberfläche des Schlauchkörpers fixiert.

Es empfiehlt sich, dass die zweite Verstärkungswendel parallel bzw. im Wesentlichen parallel zu dem Kunststoffstreifen des Wickelschlauches verläuft bzw. parallel/im Wesentlichen parallel zur Wickelrichtung des Kunststoffstreifens verläuft. Vorzugsweise verläuft die zweite Verstärkungswendel parallel bzw. im Wesentlichen parallel zu der ersten Verstärkungswendel.
Es liegt im Rahmen der Erfindung, dass die zweite Verstärkungswendel aus Kunststoff bzw. im Wesentlichen aus Kunststoff besteht. Zweckmäßigerweise besteht die zweite Verstärkungswendel aus PVC bzw. aus Hart-PVC. Es empfiehlt sich, dass der Kunststoff der zweiten Verstärkungswendel eine größere Härte bzw. eine wesentlich größere Härte aufweist als der Kunststoff des Kunststoffstreifens des Schlauchkörpers. - Eine besonders bevorzugte Ausführungsform der Erfindung ist dadurch gekennzeichnet, dass die zweite Verstärkungswendel über zumindest 5 %, vorzugsweise über zumindest 8 %, bevorzugt über zumindest 10 %, sehr bevorzugt über zumindest 15 % und besonders bevorzugt über zumindest 20 % ihres Umfanges in den Schlauchkörper bzw. in den Kunststoffstreifen eingebettet ist. Wie oben bereits erläutert bezieht sich der Begriff Umfang insbesondere auf den Querschnitt der zweiten Verstärkungswendel.

Eine empfohlene Ausführungsform der Erfindung zeichnet sich dadurch aus, dass die radiale Dicke d₃ des Schlauchkörpers bzw. Schlauchkörpermaterials schlauchinnenseitig unterhalb der zweiten Verstärkungswendel größer ist als die radiale Dicke d₁ des Schlauchkörpermaterials schlauchinnenseitig unterhalb der ersten Verstärkungswendel. Vorzugsweise ist die radiale Dicke d₃ des Schlauchkörpers bzw. Schlauchkörpermaterials unterhalb der zweiten Verstärkungswendel größer als die radiale Dicke d₂ des Schlauchkörpermaterials schlauchaußenseitig oberhalb der ersten Verstärkungswendel. Zweckmäßigerweise ist die radiale Dicke d₃ des Schlauchkörpers unterhalb der zweiten Verstärkungswendel mindestens dreimal so groß, zweckmäßigerweise mindestens viermal so groß wie die radiale Dicke d₁. Es empfiehlt sich, dass die radiale Dicke d₃ des Schlauchkörpers unterhalb der zweiten Verstärkungswendel mindestens 1,5-mal so groß ist wie die radiale Dicke d₂ des Schlauchkörpermaterials schlauchaußenseitig oberhalb der ersten Verstärkungswendel und vorzugsweise mindestens zweimal so groß ist wie diese radiale Dicke d₂.
Eine sehr bewährte Ausführungsform der Erfindung ist dadurch gekennzeichnet, dass der axiale Abstand a₁ der Mittelpunkte M₁ der axial benachbarten Verstärkungswendelabschnitte der ersten Verstärkungswendel das 1,5-fache bis 5-fache, vorzugsweise das 2-fache bis 4-fache und bevorzugt das 2,2-fache bis 3-fache der radialen Dicke D₁ bzw. des Durchmessers der ersten Verstärkungswendel beträgt. Axialer Abstand meint hier und nachfolgend insbesondere den Abstand parallel zur Längsmittelachse des Wickelschlauches bzw. den axialen Abstand in der Projektion auf die Längsmittelachse des Wickelschlauches. Gemäß besonders empfohlener Ausführungsform der Erfindung beträgt der axiale Abstand a₂ der Mittelpunkte M₂ der axial benachbarten Verstärkungswendelabschnitte der zweiten Verstärkungswendel das 1,5-fache bis 5-fache, vorzugsweise das 2-fache bis 4-fache, bevorzugt das 2,2-fache bis 3-fache der radialen Dicke D₂ bzw. des Durchmessers der zweiten Verstärkungswendel.

Der Erfindung liegt die Erkenntnis zugrunde, dass ein erfindungsgemäßer Wickelschlauch den eingangs beschriebenen Anforderungen optimal genügt. Der erfindungsgemäße Wickelschlauch weist zunächst eine überraschend hohe Flexibilität auf. Nichtsdestoweniger ist er gegenüber mechanischen Einwirkungen sehr resistent. Das gilt vor allem für von außen bzw. auf die Außenoberfläche des Wickelschlauches einwirkende mechanische Beanspruchungen. Weiterhin ist der erfindungsgemäße Wickelschlauch auch gegenüber verschiedenen Innendrücken ausreichend resistent. Das gilt sowohl für hohe Drücke im Innenraum des Wickelschlauches als auch für sehr niedrige Drücke. Insbesondere weist der erfindungsgemäße Wickelschlauch eine hohe Vakuumbelastbarkeit auf. Fernerhin ist darauf hinzuweisen, dass der erfindungsgemäße Wickelschlauch mit verhältnismäßig einfachen, wenig aufwendigen und kostengünstigen Mitteln herstellbar ist.

Nachfolgend wird die Erfindung anhand einer lediglich ein Ausführungsbeispiel darstellenden Zeichnung näher erläutert. Es zeigen in schematischer Darstellung:

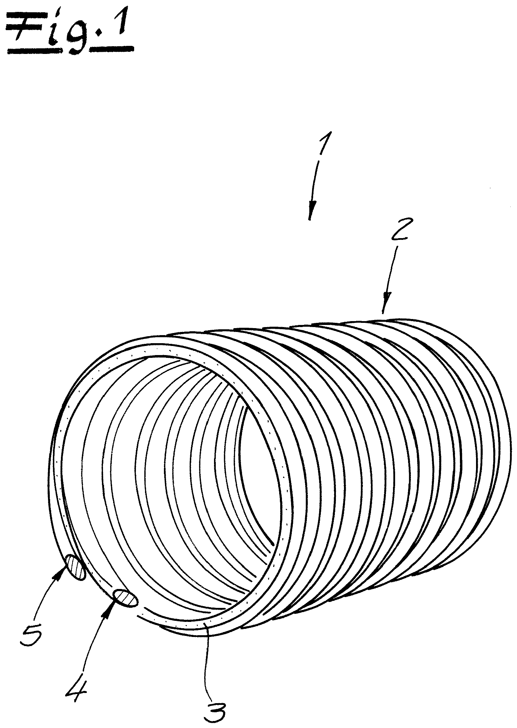

- **Fig. 1**: eine perspektivische Ansicht eines erfindungsgemäßen Wickelschlauches,
- **Fig. 2**: einen Längsschnitt durch einen erfindungsgemäßen Wickelschlauch,
- **Fig. 3**: den Gegenstand gemäß Fig. 2 in einer anderen Ausführungsform und
- **Fig. 4**: den Gegenstand nach Fig. 2 in einer weiteren Ausführungsform.

Die Figuren zeigen einen erfindungsgemäßen Wickelschlauch 1 mit einem zu einem Schlauchkörper 2 wendelförmig gewickelten Kunststoffstreifen 3. Der Kunststoffstreifen 3 besteht vorzugweise und im Ausführungsbeispiel aus thermoplastischem Kunststoff. Zweckmäßigerweise und im Ausführungsbeispiel überlappen sich im Schlauch 1 benachbarte Kunststoffstreifenabschnitte 3', 3" des wendelförmig gewickelten Kunststoffstreifens 3 mit ihren Längskantenabschnitten 6. Dabei sind die Längskantenabschnitte 6 des Kunststoffstreifens 3 bzw. der Kunststoffstreifenabschnitte 3', 3" in ihrem Überlappungsbereich miteinander verschweißt. Bevorzugt und im Ausführungsbeispiel ist diese Verschweißung der Längskantenabschnitte 6 im Überlappungsbereich zusatz-klebstoff-frei und zusatz-schweißwerkstoff-frei ausgebildet. Somit wird zur gegenseitigen Fixierung der Längskantenabschnitte 6 empfohlenermaßen kein zusätzlicher Klebstoff oder zusätzlicher Schweißwerkstoff eingesetzt. Vielmehr werden die Längskantenabschnitte 6 der Kunststoffstreifenabschnitte 3', 3" vorzugsweise im Zuge des Wickelvorgangs über an ihren Oberflächen vorhandenen weichen bzw. schmelzflüssigen Kunststoff des Kunststoffstreifens 3 miteinander verschweißt.

Erfindungsgemäß weist der Wickelschlauch zumindest zwei - bevorzugt und im Ausführungsbeispiel zwei - mit dem Schlauchkörper 2 verbundene Verstärkungswendeln 4, 5 auf. Empfohlenermaßen und im Ausführungsbeispiel ist die erste Verstärkungswendel 4 bezüglich ihres Umfanges vollständig in den Schlauchkörper 2 bzw. in den Kunststoff des Schlauchkörpers 2 eingebettet bzw. integriert. Es liegt dabei im Rahmen der Erfindung, dass die erste Verstärkungswendel 4 parallel zu dem Kunststoffstreifen 3 bzw. zur Wickelrichtung des Kunststoffstreifens 3 verläuft. Zweckmäßigerweise besteht die erste Verstärkungswendel 4 aus Kunststoff, wobei der Kunststoff der ersten Verstärkungswendel 4 vorzugsweise eine größere Härte und bevorzugt eine wesentlich größere Härte aufweist als der Kunststoff des Kunststoffstreifens 3, in den die erste Verstärkungswendel 4 vollständig eingebettet ist.

Im Ausführungsbeispiel entspricht die radiale Dicke d₁ des Schlauchkörpermaterials schlauchinnenseitig unterhalb der ersten Verstärkungswendel 4 der radialen Dicke d₂ bzw. in etwa der radialen Dicke d₂ des Schlauchkörpermaterials schlauchaußenseitig oberhalb der ersten Verstärkungswendel 4. Es liegt auch im Rahmen der Erfindung, dass die schlauchinnenseitige radiale Dicke d₁ geringer bzw. deutlich geringer ist als die schlauchaußenseitige radiale Dicke d₂ des Schlauchkörpermaterials. Zweckmäßigerweise und im Ausführungsbeispiel ist die radiale Dicke D₁ der ersten Verstärkungswendel 4 größer als die radiale Dicke d₁ des Schlauchkörpermaterials schlauchinnenseitig unterhalb der ersten Verstärkungswendel 4 und zwar ist bevorzugt und im Ausführungsbeispiel die radiale Dicke D₁ der ersten Verstärkungswendel mehr als dreimal so groß wie die schlauchinnenseitige radiale Dicke d₁ des Schlauchkörpermaterials. Empfohlenermaßen und im Ausführungsbeispiel ist fernerhin die radiale Dicke D₁ der ersten Verstärkungswendel 4 größer als die radiale Dicke d₂ des Schlauchkörpermaterials schlauchaußenseitig oberhalb der ersten Verstärkungswendel 4 und zwar ist die radiale Dicke D₁ der ersten Verstärkungswendel 4 vorzugsweise und im Ausführungsbeispiel mehr als dreimal so groß wie die schlauchaußenseitige radiale Dicke d₂. Bei bevorzugt und im Ausführungsbeispiel kreisrundem Querschnitt der Verstärkungswendel 4 entspricht die radiale Dicke D₁ der ersten Verstärkungswendel 4 dem Durchmesser dieser ersten Verstärkungswendel 4.

Bevorzugt und im Ausführungsbeispiel ist eine zweite Verstärkungswendel 5 an der Außenoberfläche 10 des Schlauchkörpers 2 angeordnet, wobei diese zweite Verstärkungswendel 5 bezüglich ihres Umfanges lediglich teilweise in den Schlauchkörper 2 eingebettet ist. Zweckmäßigerweise und im Ausführungsbeispiel ist die zweite Verstärkungswendel 5 über weniger als 40 % ihres Umfanges in den Schlauchkörper 2 bzw. in den Kunststoff des Schlauchkörpers 2 eingebettet. Es empfiehlt sich, dass die zweite Verstärkungswendel 5 über mindestens 15 %, bevorzugt über mindestens 20 % ihres Umfanges in den Schlauchkörper 2 eingebettet ist. Empfohlenermaßen und im Ausführungsbeispiel ist die zweite Verstärkungswendel 5 formschlüssig und bevorzugt zusatz-klebstoff-frei sowie zusatz-schweißwerkstoff-frei an der Außenoberfläche des Schlauchkörpers 2 in den Schlauchkörper 2 eingebettet. Zweckmäßigerweise und im Ausführungsbeispiel ist die zweite Verstärkungswendel 5 parallel zu dem Kunststoffstreifen 3 bzw. parallel zur Wickelrichtung des Kunststoffstreifens 3 angeordnet. Es empfiehlt sich, dass die zweite Verstärkungswendel 5 aus Kunststoff besteht, wobei dieser Kunststoff vorzugsweise eine größere Härte bzw. eine wesentlich größere Härte aufweist als der Kunststoff des Kunststoffstreifens 3 bzw. des Schlauchkörpers 2.

Vorzugsweise und im Ausführungsbeispiel ist die radiale Dicke d₃ des Schlauchkörpers 2 schlauchinnenseitig unterhalb der zweiten Verstärkungswendel 5 größer als die radiale Dicke d₁ des Schlauchkörpers bzw. des Schlauchkörpermaterials schlauchinnenseitig unterhalb der ersten Verstärkungswendel 4. Zweckmäßigerweise und im Ausführungsbeispiel ist fernerhin die radiale Dicke d₃ des Schlauchkörpers 2 unterhalb der zweiten Verstärkungswendel 5 größer als die radiale Dicke d₂ des Schlauchkörpers 2 bzw. Schlauchkörpermaterials schlauchaußenseitig oberhalb der ersten Verstärkungswendel 4. Dabei ist bevorzugt und im Ausführungsbeispiel die radiale Dicke d₃ des Schlauchkörpers 2 unterhalb der zweiten Verstärkungswendel 5 mehr als zweimal so groß, vorzugsweise mehr als dreimal so groß wie die radiale Dicke d₁ und/oder wie die radiale Dicke d₂.

Nach bevorzugter Ausführungsform und im Ausführungsbeispiel weist die Außenoberfläche 10 des Wickelschlauches 1 bzw. des Schlauchkörpers 2 bezüglich der Längsrichtung des Wickelschlauches 1 alternierend Wellenberge 7 und Wellentäler 8 auf. Diese Wellenberge 7 und Wellentäler 8 laufen zweckmäßigerweise und im Ausführungsbeispiel über den Umfang des Wickelschlauches 1 um. Vorzugsweise und im Ausführungsbeispiel verläuft die zweite Verstärkungswendel 5 in den Wellentälern 8 der Außenoberfläche 10 des Schlauchkörpers 2. Zweckmäßigerweise und im Ausführungsbeispiel ist die erste Verstärkungswendel 4 innerhalb bzw. unterhalb der Wellenberge 7 des Schlauchkörpers 2 vorgesehen.

Empfohlenermaßen und im Ausführungsbeispiel ist die zweite Verstärkungswendel 5 unmittelbar oberhalb der Überlappungsnaht bzw. Schweißnaht 9 von zwei einander überlappenden und miteinander verbundenen Längskantenabschnitten 6 angeordnet. Zweckmäßigerweise und im Ausführungsbeispiel bildet die Schweißnaht 9 bzw. die gedachte Verlängerung der Schweißnaht 9 die Tangente des kreisrunden Querschnittes der zweiten Verstärkungswendel 5.

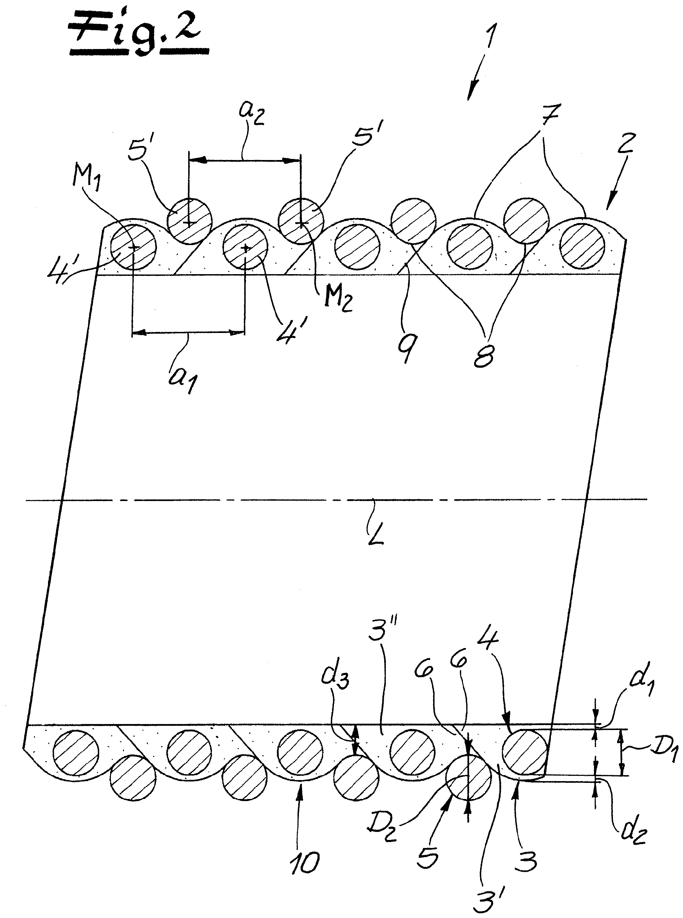

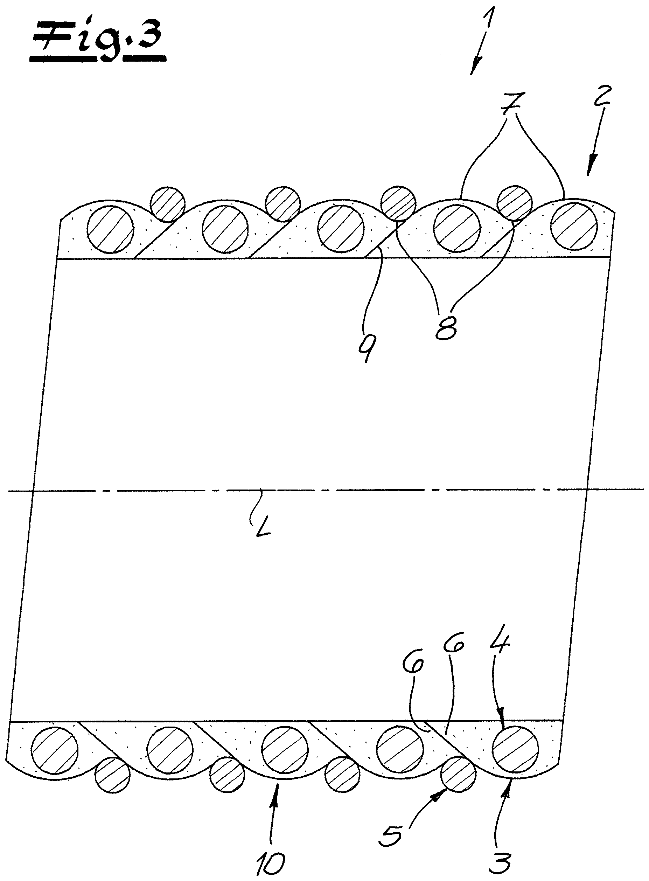

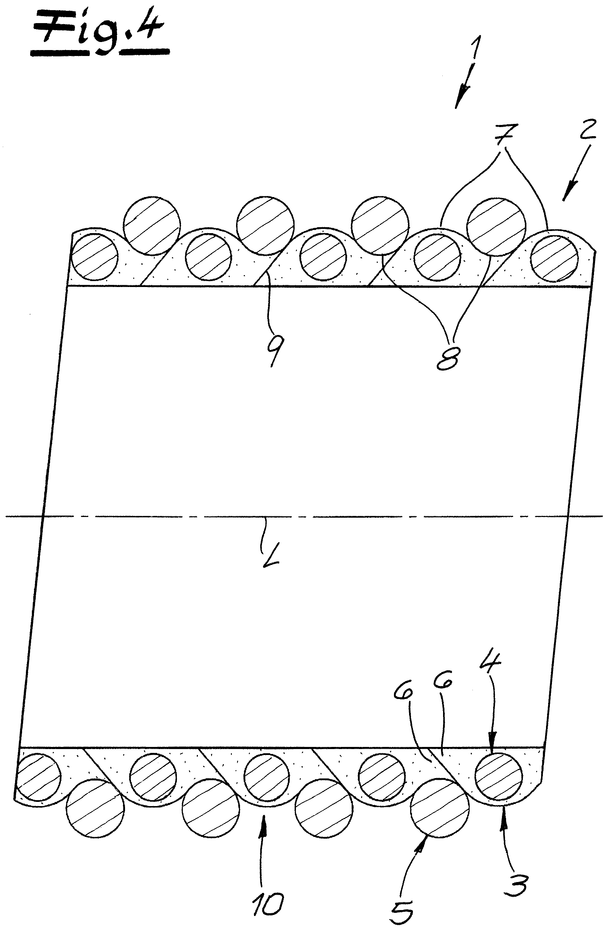

Im Ausführungsbeispiel nach Fig. 2 ist die Querschnittsfläche der ersten Verstärkungswendel 4 und der zweiten Verstärkungswendel 5 gleich groß bzw. in etwa gleich groß. Dagegen ist im Ausführungsbeispiel nach Fig. 3 die Querschnittsfläche der ersten Verstärkungswendel 4 größer als die Querschnittsfläche der zweiten Verstärkungswendel 5. Im Ausführungsbeispiel gemäß Fig. 4 ist die Querschnittsfläche der zweiten Verstärkungswendel 5 größer als die Querschnittsfläche der ersten Verstärkungswendel 4.

Nach sehr bewährter Ausführungsform der Erfindung beträgt der axiale Abstand a₁ der Mittelpunkte M₁ der axial benachbarten Verstärkungswendelabschnitte 4' der ersten Verstärkungswendel 4 das 1,5-fache bis 5-fache, vorzugsweise das 2-fache bis 4-fache und bevorzugt das 2,2-fache bis 3-fache der radialen Dicke D₁ bzw. des Durchmessers der ersten Verstärkungswendel 4. Es empfiehlt sich, dass der axiale Abstand a₂ der Mittelpunkte M₂ der axial benachbarten Verstärkungswendelabschnitte 5' der zweiten Verstärkungswendel 5 das 1,5-fache bis 5-fache, vorzugsweise das 2-fache bis 4-fache, bevorzugt das 2,2-fache bis 3-fache der radialen Dicke D₂ bzw. des Durchmessers der zweiten Verstärkungswendel 5 beträgt.

## Patentansprüche

1. Wickelschlauch (1) mit zumindest einem zu einem Schlauchkörper (2) wendelförmig gewickelten Materialstreifen, insbesondere Kunststoffstreifen (3) und zumindest zwei mit dem Schlauchkörper (2) verbundenen Verstärkungswendeln (4, 5), wobei zumindest eine erste Verstärkungswendel (4) bezüglich ihres Umfanges vollständig in den Schlauchkörper (2) bzw. in das Material, insbesondere in den Kunststoff des Schlauchkörpers (2) eingebettet ist, wobei zumindest eine zweite Verstärkungswendel (5) an der Außenoberfläche des Schlauchkörpers (2) angeordnet ist, wobei diese zweite Verstärkungswendel (5) bezüglich ihres Umfanges teilweise in den Schlauchkörper (2) eingebettet ist und wobei die zweite Verstärkungswendel (5) über weniger als 50 %, vorzugsweise über weniger als 48 %, bevorzugt über weniger als 45 % ihres Umfanges in den Schlauchkörper (2) eingebettet ist, **dadurch gekennzeichnet, dass** die radiale Dicke D₁ der ersten Verstärkungswendel (4) mehr als dreimal so groß ist wie die radiale Dicke d₁ des Schlauchkörpers (2) schlauchinnenseitig unterhalb der ersten Verstärkungswendel (4) und mindestens zweimal so groß ist wie die radiale Dicke d₂ des Schlauchkörpers schlauchaußenseitig oberhalb der ersten Verstärkungswendel (4).

2. Wickelschlauch nach Anspruch 1, wobei der Materialstreifen als Kunststoffstreifen (3) aus thermoplastischem Kunststoff ausgebildet ist und wobei im Schlauch (1) benachbarte Kunststoffstreifenabschnitte (3', 3") des wendelförmig gewickelten Kunststoffstreifens (3) sich mit ihren Längskantenabschnitten (6) überlappen und im Überlappungsbereich miteinander verschweißt sind.

3. Wickelschlauch nach einem der Ansprüche 1 oder 2, wobei die Verschweißung der Längskantenabschnitte (6) im Überlappungsbereich zusatz-klebstoff-frei und/oder zusatz-schweißwerkstoff-frei ausgebildet ist.

4. Wickelschlauch nach einem der Ansprüche 1 bis 3, wobei die erste Verstärkungswendel (4) in den bzw. in einen Kunststoffstreifen (3) aus thermoplastischem Kunststoff vollständig eingebettet ist und parallel zu dem Kunststoffstreifen (3) bzw. parallel zur Wickelrichtung des Kunststoffstreifens (3) verläuft.

5. Wickelschlauch nach einem der Ansprüche 1 bis 4, wobei die erste Verstärkungswendel (4) aus Kunststoff bzw. im Wesentlichen aus Kunststoff besteht und wobei insbesondere der Kunststoff der ersten Verstärkungswendel (4) eine größere Härte, bevorzugt eine wesentlich größere Härte aufweist als der Kunststoff des Kunststoffstreifens (3), in den die erste Verstärkungswendel (4) vollständig eingebettet ist.

6. Wickelschlauch nach einem der Ansprüche 1 bis 5, wobei die radiale Dicke d₁ des Schlauchkörpers (2) schlauchinnenseitig unterhalb der ersten Verstärkungswendel (4) geringer ist als die radiale Dicke d₂ des Schlauchkörpers schlauchaußenseitig oberhalb der ersten Verstärkungswendel (4).

7. Wickelschlauch nach Anspruch 6, wobei die Dicke d₁ geringer ist als 50 % der Dicke d₂, vorzugsweise geringer ist als 40 % der Dicke d₂.

8. Wickelschlauch nach einem der Ansprüche 1 bis 7, wobei die zweite Verstärkungswendel (5) über weniger als 40 %, vorzugsweise über weniger als 38 % und bevorzugt über weniger als 35 % ihres Umfanges in den Schlauchkörper (2) eingebettet ist.

9. Wickelschlauch nach einem der Ansprüche 1 bis 8, wobei die zweite Verstärkungswendel (5) formschlüssig und bevorzugt zusatz-klebstoff-frei und/oder zusatz-schweißwerkstoff-frei an der Außenoberfläche (10) des Schlauchkörpers (2) in den Schlauchkörper (2) eingebettet ist.

10. Wickelschlauch nach einem der Ansprüche 1 bis 9, wobei die zweite Verstärkungswendel (5) parallel bzw. im Wesentlichen parallel zu dem zumindest einem Kunststoffstreifen (3) bzw. parallel / im Wesentlichen parallel zur Wickelrichtung des zumindest einen Kunststoffstreifens (3) verläuft.

11. Wickelschlauch nach einem der Ansprüche 1 bis 10, wobei die zweite Verstärkungswendel (5) aus Kunststoff bzw. im Wesentlichen aus Kunststoff besteht und wobei vorzugsweise der Kunststoff der zweiten Verstärkungswendel (5) eine größere Härte bzw. eine wesentlich größere Härte aufweist als der Kunststoff des Kunststoffstreifens (3) bzw. als der Kunststoff des Schlauchkörpers (2).

12. Wickelschlauch nach einem der Ansprüche 1 bis 11, wobei die radiale Dicke d₃ des Schlauchkörpers (2) unterhalb der zweiten Verstärkungswendel (5) größer ist als die radiale Dicke d₁ und die radiale Dicke d₂, wobei vorzugsweise die radiale Dicke d₃ mindestens dreimal so groß, zweckmäßigerweise mindestens viermal so groß ist wie die radiale Dicke d₁ und bevorzugt mindestens 1,5-mal so groß ist wie die radiale Dicke d₂.

13. Wickelschlauch nach einem der Ansprüche 1 bis 12, wobei die Außenoberfläche (10) des Schlauchkörpers (2) in Längsrichtung des Wickelschlauches (1) alternierend Wellenberge (7) und Wellentäler (8) aufweist bzw. von dem Kunststoff des Schlauchkörpers (2) gebildete Wellenberge (7) und Wellentäler (8) aufweist und wobei nach bevorzugter Ausführungsform die zweite Verstärkungswendel (5) in den Wellentälern (8) des Schlauchkörpers (2) angeordnet ist.

## Claims

1. Strip-wound hose (1) comprising at least one material strip, in particular a plastic material strip (3), wound in a spiral shape into a hose body (2), and at least two reinforcing coils (4, 5) connected to the hose body (2), wherein at least one first reinforcing coil (4) is completely embedded with respect to its periphery into the hose body (2) or into the material, in particular into the plastic material of the hose body (2), wherein at least one second reinforcing coil (5) is arranged on the outer surface of the hose body (2), wherein this second reinforcing coil (5) is partially embedded with respect to its periphery into the hose body (2), and wherein the second reinforcing coil (5) is embedded across less than 50%, particularly across less than 48%, preferably across less than 45% of its periphery into the hose body (2), **characterized in that** the radial thickness D₁ of the first reinforcing coil (4) is more than three times as large as than the radial thickness d₁ of the hose body (2) on the hose inner side underneath the first reinforcing coil (4) and at least twice as large as the radial thickness d₂ of the hose body on the hose outer side above the first reinforcing coil (4).

2. Strip-wound hose according to claim 1, wherein the material strip is formed as a plastic material strip (3) made from thermoplastic material, and wherein in the hose (1), adjacent plastic material strip portions (3', 3") of the spirally wound plastic strip (3) overlap in their longitudinal edge portions (6) and are welded to each other in the overlapping area.

3. Strip-wound hose according to any one of claims 1 or 2, wherein the weld of the longitudinal edge portions (6) in the overlapping region is designed as free of additional adhesives and/or free of additional welding material.

4. Strip-wound hose according to any one of claims 1 or 3, wherein the first reinforcing coil (4) is completely embedded in the/a plastic material strip (3) made from thermoplastic material and extends parallel to the plastic material strip (3) or parallel to the winding direction of the plastic material strip (3) .

5. Strip-wound hose according to any one of claims 1 or 4, wherein the first reinforcing coil (4) comprises plastic material or substantially plastic material, and wherein in particular the plastic material of the first reinforcing coil (4) has a greater hardness, preferably a substantially greater hardness, than the plastic material of the plastic material strip (3) in which the first reinforcing coil (4) is completely embedded.

6. Strip-wound hose according to any one of claims 1 or 5, wherein the radial thickness d₁ of the hose body (2) on the hose inner side underneath the first reinforcing coil (4) is less than the radial thickness d₂ of the hose body on the hose outer side above the first reinforcing coil (4).

7. Strip-wound hose according to claim 6, wherein the thickness d₁ is less than 50% of thickness d₂, preferably is less than 40% of thickness d₂.

8. Strip-wound hose according to any one of claims 1 or 7, wherein the second reinforcing coil (5) is embedded across less than 40%, preferably across less than 38%, and advantageously across less than 35% of its periphery into the hose body (2).

9. Strip-wound hose according to any one of claims 1 or 8, wherein the second reinforcing coil (5) is embedded into the hose body (2) in a form-locking way, and preferably free of additional adhesives and/or free of additional welding material on the outer surface (10) of the hose body (2).

10. Strip-wound hose according to any one of claims 1 or 9, wherein the second reinforcing coil (5) extends parallel or substantially parallel to the at least one plastic material strip (3) or parallel/substantially parallel to the winding direction of the at least one plastic material strip (3).

11. Strip-wound hose according to any one of claims 1 or 10, wherein the second reinforcing coil (5) comprises plastic material or substantially plastic material, and wherein the plastic material of the second reinforcing coil (5) preferably has a greater hardness or a substantially greater hardness than the plastic material of the plastic material strip (3) or the plastic material of the hose body (2).

12. Strip-wound hose according to any one of claims 1 or 11, wherein the radial thickness d₃ of the hose body (2) underneath the second reinforcing coil (5) is greater than the radial thickness d₁ and the radial thickness d₂, wherein the radial thickness d₃ is preferably at least three times as large, advantageously at least four times as large as the radial thickness d₁ and preferably at least 1.5 times as large as the radial thickness d₂.

13. Strip-wound hose according to any one of claims 1 or 12, wherein the outer surface (10) of the hose body (2) has corrugation peaks (7) and corrugation valleys (8) alternating in the longitudinal direction of the strip-wound hose (1) or has corrugation peaks (7) and corrugation valleys (8) formed by the plastic material of the hose body (2), and wherein the second reinforcing coil (5) is arranged in the corrugation valleys (8) of the hose body (2) according to a preferred embodiment.

## Revendications

1. Flexible à enrouler (1), pourvu d'au moins une bande de matière, notamment d'une bande de matière plastique (3) enroulée en forme hélicoïdale en un corps de flexible (2) et d'au moins deux spirales de renfort (4, 5) assemblée avec le corps de flexible (2), au moins une première spirale de renfort (4) étant incorporée au niveau de sa circonférence dans le corps de flexible (2) ou dans la matière, notamment dans la matière plastique du corps de flexible (2), au moins une deuxième spirale de renfort (5) étant placée sur la surface externe du corps de flexible (2), ladite deuxième spirale de renfort (5) étant incorporée partiellement au niveau de sa circonférence dans le corps de flexible (2) et la deuxième spirale de renfort (5) étant incorporée sur moins de 50 %, de préférence sur moins de 48 %, de manière préférentielle sur moins de 45 % de sa circonférence dans le corps de flexible (2), **caractérisé en ce que** l'épaisseur radiale D₁ de la première spirale de renfort (4) correspond au moins au triple de l'épaisseur radiale d₁ du corps de flexible (2) sur la face interne du flexible, en-dessous de la première spirale de renfort (4) et au moins au double de l'épaisseur radiale d₂ du corps de flexible sur la face externe du flexible, au-dessus de la première spirale de renfort (4).

2. Flexible à enrouler selon la revendication 1, la bande de matière étant conçue sous la forme d'une bande de matière plastique (3) en matière thermoplastique et dans le flexible (1), des tronçons de bande de matière plastique (3', 3") voisins de la bande de matière plastique (3) enroulée en forme d'hélice se chevauchant par leurs tronçons d'arête longitudinale (6) et étant soudés l'un avec l'autre dans la zone de chevauchement.

3. Flexible à enrouler selon l'une quelconque des revendications 1 ou 2, la soudure des tronçons d'arête longitudinale (6) dans la zone de chevauchement étant conçue en étant exempte d'agent adhésif additionnel et/ou exempte de matière d'apport de soudage additionnelle.

4. Flexible à enrouler selon l'une quelconque des revendications 1 à 3, la première spirale de renfort (4) étant incorporée totalement dans la ou dans une bande de matière plastique (3) en matière thermoplastique et s'écoulant à la parallèle de la bande de matière plastique (3) ou à la parallèle du sens d'enroulement de la bande de matière plastique (3) .

5. Flexible à enrouler selon l'une quelconque des revendications 1 à 4, la première spirale de renfort (4) étant constituée de matière plastique ou essentiellement de matière plastique et notamment la matière plastique de la première spirale de renfort (4) faisant preuve d'une dureté supérieure, de préférence d'une dureté sensiblement supérieure à celle de la matière plastique de la bande de matière plastique (3), dans laquelle la première spirale de renfort (4) est totalement incorporée.

6. Flexible à enrouler selon l'une quelconque des revendications 1 à 5, l'épaisseur radiale d₁ du corps de flexible (2) sur la face interne du flexible, en-dessous de la première spirale de renfort (4) étant inférieure à l'épaisseur radiale d₂ du corps de flexible sur la face externe du flexible, au-dessus de la première spirale de renfort (4).

7. Flexible à enrouler selon la revendication 6, l'épaisseur d₁ étant inférieure à 50 % de l'épaisseur d₂, de préférence, inférieure à 40 % de l'épaisseur d₂.

8. Flexible à enrouler selon l'une quelconque des revendications 1 à 7, la deuxième spirale de renfort (5) étant incorporée sur moins de 40 %, de préférence sur moins de 38 % et de manière préférentielle sur moins de 35 % de sa circonférence dans le corps de flexible (2).

9. Flexible à enrouler selon l'une quelconque des revendications 1 à 8, la deuxième spirale de renfort (5) étant incorporée par complémentarité de forme et de préférence sans agent adhésif additionnel et/ou sans matière d'apport de soudage additionnelle sur la surface externe (10) du corps de flexible (2) dans le corps de flexible (2).

10. Flexible à enrouler selon l'une quelconque des revendications 1 à 9, la deuxième spirale de renfort (5) s'écoulant à la parallèle ou sensiblement à la parallèle de l'au moins une bande de matière plastique (3) ou à la parallèle / sensiblement à la parallèle du sens d'enroulement de l'au moins une bande de matière plastique (3).

11. Flexible à enrouler selon l'une quelconque des revendications 1 à 10, la deuxième spirale de renfort (5) étant constituée de matière plastique ou essentiellement de matière plastique et de préférence la matière plastique de la deuxième spirale de renfort (5) faisant preuve d'une dureté supérieure ou d'une dureté sensiblement supérieure à celle de la matière plastique de la bande de matière plastique (3) ou à celle de la matière plastique du corps de flexible (2) .

12. Flexible à enrouler selon l'une quelconque des revendications 1 à 11, l'épaisseur radiale d₃ du corps de flexible (2) en-dessous de la deuxième spirale de renfort (5) étant supérieure à l'épaisseur radiale d₁ et à l'épaisseur radiale d₂, de préférence l'épaisseur radiale d₃ correspondant au moins au triple, opportunément, au moins au quadruple de l'épaisseur radiale d₁ et correspondant de préférence à au moins 1,5 fois l'épaisseur radiale d₂.

13. Flexible à enrouler selon l'une quelconque des revendications 1 à 12, la surface externe (10) du corps de flexible (2) dans la direction longitudinale du flexible à enrouler (1) comportant en alternance des crêtes de vagues (7) et des creux de vagues (8) ou comportant des crêtes de vagues (7) et des creux de vagues (8) formés par la matière plastique du corps de flexible (2) et selon une forme de réalisation préférentielle, la deuxième spirale de renfort (5) étant placée dans les creux de vagues (8) du corps de flexible (2).
